# FASCICULE DE BREVET EUROPEEN

(11) **EP 0 728 392 B1**
(45) Date de publication et mention de la délivrance du brevet: **09.05.2001**
(21) Numéro de dépôt: 95900188.4
(22) Date de dépôt: 04.11.1994
(51) Int. Cl.: H04L 12/24

(54) **SYSTEME DE COMMUNICATION AVEC UN RESEAU INCLUANT UN ENSEMBLE D'ADMINISTRATION**
KOMMUNIKATIONSSYSTEM MIT EINEM EIN VERWALTUNGSMODUL EINSCHLIESSENDEM NETZ
COMMUNICATION SYSTEM WITH A NETWORK COMPRISING AN ADMINISTRATIVE UNIT

(30) Priorité: 08.11.1993 FR 9313282
(43) Date de publication de la demande: 28.08.1996
(73) Titulaire: BULL S.A., 78430 Louveciennes (FR)
(72) Inventeur: CLEMENT, Valérie, F-38240 Meylan (FR); MOURET, Régis, F-38120 Le Fontanil (FR); SAINT-PAUL, Nathalie, F-92370 Chaville (FR)
(86) Numéro de dépôt international: FR9401275
(87) Numéro de publication internationale: WO9513676

(56) Documents cités:
- EP-A- 0 463 764
- IEEE NETWORK: THE MAGAZINE OF COMPUTER COMMUNICATIONS., vol.2, no.2, Mars 1988, NEW YORK US pages 20 - 29 S.M.KLERER 'THE OSI MANAGEMENT ARCHITECTURE: AN OVERVIEW'

## Description

La présente invention concerne un système de communication avec un réseau mettant en oeuvre un code de communication appartenant à une pluralité de modèles d'interconnexion de systèmes ouverts, ce système comprenant un ensemble d'administration des différentes couches du code. Elle est applicable à tous types de réseaux, notamment de type FDDI, normalisé à l'ANSI, sous la référence X3T9-5 et à l'I.S.O. (Organisation Internationale de Normalisation).

Les réseaux modernes fonctionnent suivant une pluralité de modèles de référence qui restent voisins en ce qui concerne la définition de leur architecture sous forme de couches normalisées. Parmi ces modèles, les plus connus sont les modèles OSI (sigle anglo-saxon signifiant Interconnexion de systèmes ouverts), ISO/DSA, IPS (on rappelle que le modèle IPS (sigle anglo-saxon signifiant Suite de Protocoles Internet) inclut sous la même dénomination les sous-modèles TCP, UDP, IP, ICMP, notamment). Ainsi, dans le modèle OSI, il y a sept couches d'activités différentes, la couche la plus basse (couche 1) correspondant à la transmission physique des signaux et la couche haute (couche 7) correspondant aux fonctions réalisées par les programmes d'application (plus simplement appelés application) et les utilisateurs du réseau considéré.

Des systèmes de communication avec un réseau sont décrit par exemple dans l'IEEE NETWORK : THE MAGAZINE OF COMPUTER COMMUNICATIONS, vol. 2, n° 2, Mars 1988, NEW YORK US pages 20 - 29 et dans le brevet européen EP 0 463 764 A2.

Dans la pratique courante, les systèmes de communication avec un réseau sont constitués par l'association d'un ordinateur, encore appelé système hôte, et d'un processeur de communication. Le but du processeur de communication est d'effectuer une partie de la gestion des communications avec les autres terminaux du réseau. A ce titre, il prend en charge la gestion des couches inférieures de chacun des modèles de référence.

Un tel système de communication est par exemple décrit dans le brevet français FR-A-2 702 578 02902 déposé le 12.03.93 par la Société demanderesse sous le titre "Système de communication avec un réseau", ou encore dans le brevet français FR-A-2 708 116 déposé par la Société demanderesse le 21.07.93 sous le titre "système de communication avec un réseau et protocole d'accès au fournisseur de transport appartenant à ce système". Ces deux demandes de brevet décrivent plus particulièrement la structure logiciel d'un tel système de communication. On trouvera encore la description de la structure matérielle d'un tel système dans le brevet français FR-A-2 699 706 dont le titre est "système de transmission de données entre un bus d'ordinateur et un réseau" déposé le 22.12.92 par la même demanderesse.

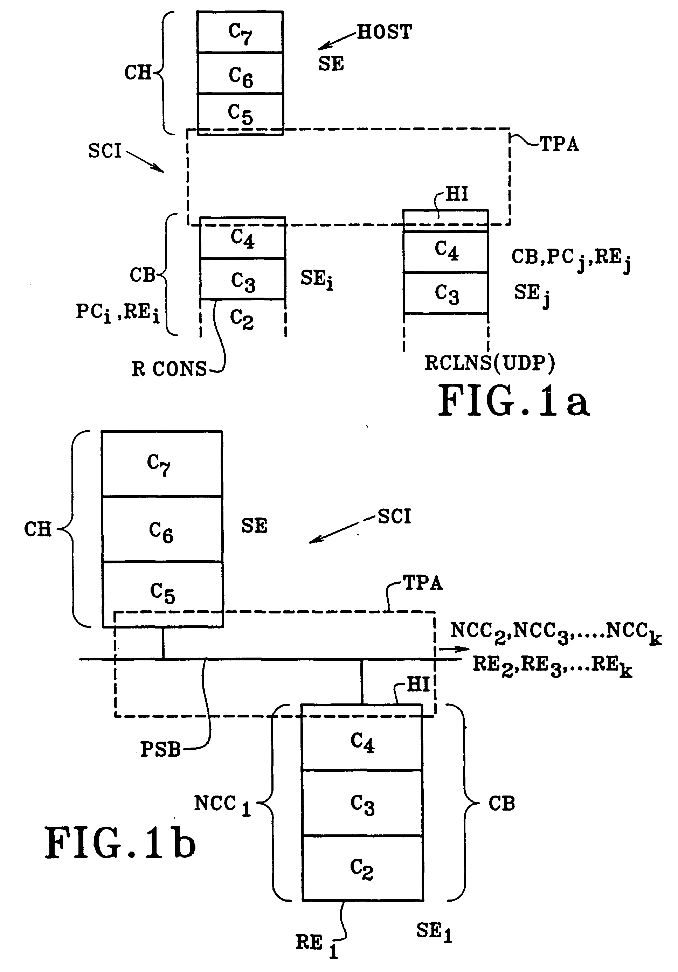

La structure générale d'un tel système de communication extrêmement simplifiée comprenant au moins un processeur de communication (un tel système de communication peut contenir plusieurs processeurs de communication pouvant communiquer avec plusieurs réseaux de types différents) est montrée aux figures 1a et 1b.

Un tel système de communication, ici dénommé, SCI met en oeuvre, au moyen du système hôte HOST, les couches hautes CH de l'un quelconque des modèles de référence OSI, ISO/DSA, IPS (ce dernier pouvant s'appuyer aussi bien sur un service de réseau en mode connecté que sur un service de réseau en mode non connecté : le mode connecté que l'on désigne par le sigle CONS, sigle anglo-saxon de Connected Oriented Network service, et le mode non connecté que l'on désigne par le sigle CNLS, sigle anglo-saxon de Connection Less Networl< Service, s'appuient sur les normes ISO 9878 et 8208 pour le premier et 8473 et 9542 pour le second, ces normes définissant les mécanismes et protocoles de routage associés).

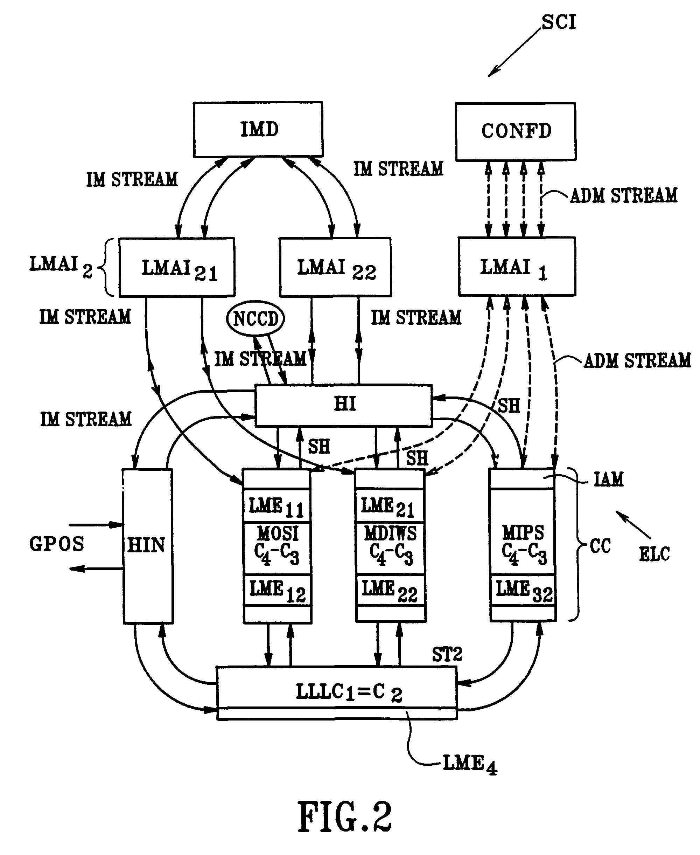

Si l'on se réfère aux figures 1a et 1b, on a représenté à titre d'exemple les trois couches hautes C₅ à C₇ du modèle OSI. Les couches CH communiquent avec les couches basses CB, à savoir C₄ à C₂ de ces mêmes modèles. Ces couches peuvent être mises en oeuvre par un ou plusieurs processeurs de communication. A la figure 2, on a supposé que SCI était constitué de l'hôte HOST associé aux processeurs de communication PCᵢ, PCⱼ qui peuvent être de différents types, leur point commun étant de mettre en oeuvre les couches basses CB. Le processeur PCᵢ est relié à un réseau REᵢ alors que PCⱼ est relié à un réseau REⱼ, ces deux derniers réseaux pouvant être de types différents. Par ailleurs, aussi bien PCi que PCj peuvent mettre en oeuvre des couches de transport s'appuyant soit sur un service de réseau en mode connecté RCONS (modèle ISO/DSA ou TCP) soit sur un service de réseau en mode non connecté RCLNS (modèle UDP).

A la figure 1b, les couches CH de HOST communiquent avec les couches basses CB, mises en oeuvre par une pluralité de processeurs de communication de type NCC, à savoir NCC₁, NCC₂, NCCₖ connectés à des réseaux RE₁, RE₂, Rₖ qui peuvent être soient identiques, soit de types différents, où les couches de transport peuvent s'appuyer soient sur des services de réseau en mode connecté soient sur des services en mode non connecté.

L'hôte HOST comprend un système d'exploitation SE qui met en oeuvre les couches hautes CH alors que les processeurs de communication PCᵢ, PCⱼ à la figure 1a, NCC₁ à la figure 1b comprennent respectivement les systèmes d'exploitation SEᵢ, SEⱼ, SE₁. Un exemple de système d'exploitation des processeurs de communication tels que PCi, PCj, NCC1 est par exemple décrit dans le brevet français FR-A-2 679 351 déposée le 15.07.91 par la demanderesse, sous le titre "Système d'exploitation pour dispositif universel de couplage d'un bus d'ordinateur à une liaison spécifique d'un réseau".

Le système de communication SCI comporte des moyens d'accès au fournisseur de transport de la couche C₄ permettant à la partie inférieure des couches hautes CH, ici disposée à la partie inférieure de la couche C₅, de communiquer avec le haut de couche C₄. Ces moyens d'accès sont décrits dans la demande N° 93 08968 précitée et sont seulement ici résumés :
- côté hôte, un module TPAM, appartenant à un serveur de télécommunication qui sert d'interface entre l'ensemble des couches hautes CH et le canal de liaison entre l'hôte HOST et le ou les processeurs de communication,
- du côté des processeurs de communication par une interface HI également décrite dans cette même demande, ou par toutes interfaces jouant un rôle équivalent à HI,
- des unités d'accès dont l'ensemble est désigné par TPA, symbolisé aussi bien à la figure 1a qu'à la figure 1b par un rectangle en trait interrompu, relayant le bas de la couche C₅ et le haut de la couche C₄.

A la figure 1a, on a supposé que le transfert physique des données entre le bas des couches hautes CH et le haut de la couche de transport C₄ s'effectue au moyen d'un quelconque canal sûr n'autorisant pas la perte de message, alors qu'à la figure 1b, ce transfert est, par exemple, effectué au moyen d'un bus de type MULTIBUS II, appelé ici PSB (norme IEEE 1296).

Dans tout système de communication, et plus précisément dans tout processeur de communication, l'utilisateur a besoin de connaître à tout instant, l'état dans lequel se trouve chacune des couches du code de communication, et même chacun des objets se situant à l'intérieur des couches de communication.

On rappelle qu'un objet appartenant à une couche d'un code de communication est constitué par un ensemble de fonctionnalités qui travaille dans un même but : ainsi, par exemple, l'ensemble des fonctionnalités servant à définir une connexion est un objet. Physiquement, un objet est constitué par une table de données située en mémoire, ou un ensemble de tables de données.

Un attribut, ou encore un paramètre définit une caractéristique d'un objet. Un objet pourra donc être défini par un ensemble d'attributs. Un ensemble d'attributs dont chaque attribut a une valeur est également appelé instance d'objet. L'état d'un objet ou d'une couche d'un code de communication dépend de l'instant où on la considère. Elle peut se trouver en état de communication avec d'autres couches, ou encore être dans un état de configuration ou d'initialisation. Pour savoir, à chaque instant, où en sont chacun des objets ou chacune des couches d.e communication, tout système de communication comporte généralement un ensemble d'administration lui permettant de connaître l'état dans lequel se situe chacune des couches ou chacun des objets d'une couche.

C'est précisément l'objet de la présente invention que de définir un tel ensemble d'administration pour tout système de communication tel que ceux montrés aux figures 1a et 1b.

Selon l'invention, le système de communication avec un réseau mettant un oeuvre un code de communication appartenant à une pluralité de modèles d'interconnexion de systèmes ouverts, dont le travail est organisé par au moins un système d'exploitation associé à une pluralité d'applications, et dont le but est de transmettre ou de recevoir des données nécessaires aux applications, vers ou depuis le réseau, comprenant un ensemble d'administration des différentes couches du code, est caractérisé en ce que cet ensemble comprend :
- un configurateur établissant, lors de l'initialisation du système, l'empilement des différentes couches au moyen de liens de types STREAMS entre celles-ci,
- un module d'administration permettant l'accès à toute information d'ordre administratif, à l'intérieur de chacune des couches du code,
- une première interface d'administration entre le module d'administration et des entités d'administration des couches situées à l'intérieur de celles-ci,
- une seconde interface d'administration entre le configurateur d'une part, et les différentes entités et le module d'administration d'autre part.

D'autres caractéristiques et avantages de la présente invention apparaîtront dans la description suivante donnée à titre d'exemple non limitatif et en se référant aux dessins annexés.

### Sur ces dessins :

La figure 1, composée des figures 1a et 1b rappelle quels sont les différents éléments constitutifs essentiels d'un système de communication, auquel s'applique l'invention,

La figure 2 montre l'ensemble des modules logiciels inclus dans le processeur de communication, cet ensemble comprenant l'ensemble d'administration propre au système selon l'invention,

La figure 3 montre de manière plus générale, la structure d'un système de communication quelconque selon l'invention,

La figure 4 montre la structure d'un message propre à l'ensemble d'administration appartenant au système de communication selon l'invention,

La figure 5 montre le structure interne de chacun des modules d'administration appartenant à l'ensemble d'administration du système de communication selon l'invention.

On se réfère à la figure 2.

Cette figure montre l'ensemble logiciel de communication ELC appartenant par exemple à l'un des processeurs de communication NCC₁, NCC₂, NCC₃ déjà décrit dans l'une quelconque des trois demandes de brevet précitées. Cet ensemble logiciel ELC fait partie du système de communication selon l'invention, système que nous désignerons de la même façon qu'à la figure 1, à savoir SCI.

L'ensemble ELC comprend :
- un code de communication CC, comprenant par exemple trois empilements de couches de communication propres à des modèles de référence différents, à savoir le modèle OSI, le modèle ISO/DSA, et le modèle IPS. Ces différents modules sont appelés respectivement MOSI, MDIWS, MIPS. Ils sont plus spécifiquement relatifs aux couches C₄ et C₃. Le code de communication comprend encore la couche C₂ encore appelée LLC₁ qui est commune aux trois modules MOSI, MDIWS, MIPS.
- l'interface HI entre le serveur de communication NCCD appartenant au système hôte HOST, et les couches basses CB ici représentées par les trois modules MOSI, MDIWS, MIPS. Le rôle de HI et de NCCD est décrit plus en détail dans les demandes 93 02902 et 93 08968 précitées.
- l'interface HIN déjà décrite dans l'une quelconque des trois demandes de brevet précitées permet de faire communiquer l'interface HI et la couche C₂ avec le système d'exploitation GPOS du processeur de communication appartenant au système de communication SCI selon l'invention.
- le module de configuration CONFD dont le rôle a été précisé plus haut,
- le module d'administration IMD, dont le rôle a été également précisé plus haut,
- une première interface d'administration LMAI₁ disposée entre le configurateur CONFD et chacun des modules de communication MOSI, MDIWS, MIPS,
- une seconde interface d'administration LMAI₂ composée en fait de deux interfaces d'administration identiques, à savoir LMAI₂₁ et LMAI₂₂ assurant respectivement l'interface entre le module d'administration IMD et chacun des trois modules de communication, MOSI, MDIWS, MIPS d'une part et avec l'interface HI d'autre part.

La liaison entre le configurateur CONFD et la première interface d'administration LMAI₁ d'une part, et les liaisons entre cette dernière et chacun des trois modules MOSI, MDIWS et MIPS s'effectue aux moyens de liaisons de type "STREAMS", plus spécifiquement appelées ADM STREAMS. Les liaisons entre le module d'administration IMD et chacune des deux interfaces LMAI₂₁, LMAI₂₂ ainsi que les liaisons entre ces deux dernières interfaces et les trois modules de communication MOSI, MDIWS et MPIS d'une part et l'interface HI d'autre part sont effectuées au moyen de liaisons de type "STREAMS", plus spécifiquement IM STREAMS, qui sont des liaisons de type administratif.

Par ailleurs, on rappelle que les couches de communication C₂, C₃, C₄ communiquent entre elles deux à deux par l'intermédiaire de fonctions primitives permettant à deux couches voisines de dialoguer entre elles. Ainsi, les couches C₂ et C₃ communiquent entre elles par l'intermédiaire de l'ensemble de fonctions de type STREAM ST₂ alors que les couches C₃ et C₄ communiquent par l'intermédiaire de l'ensemble de fonction ST₃, Par ailleurs C₄ communique avec l'interface HI par l'intermédiaire d'un ensemble de fonctions SH. Ces ensembles de fonctions sont également des fonctions de type STREAM. L'ensemble des fonctions ST₂, ST₃, SH, ADM STREAM, et IM STREAMS, sont définis dans les documents suivants :
- Unix System V, release 4 -STREAM Programmer guide ATT issue 1,
- Unix System V, release 3.2 - STREAM Programmer guide ATT (ISBN : 0-13-944810-1) : 1989,

Par ailleurs, dans les modèles OSI, ISO/DSA chacune des couches de communication comprend des entités d'administration spécifiques, entités dont le rôle est d'organiser le travail d'administration de chacune des couches de communication appartenant au code de communication CC. Ainsi, le module MOSI comprend les entités d'administration LME₁₁ et LME₁₂ relatives respectivement aux couches C₄ et C₃, le module MDIWS comprend les entités d'administration LME₂₁ et LME₂₂ relatives aux couches C₄ et C₃. Le module MIPS comprend une seule interface administrative IAM relative à C₄ et C₃ (voir plus loin). La couche C₂ commune à OSI et IPS possède l'entité d'administration LME4.

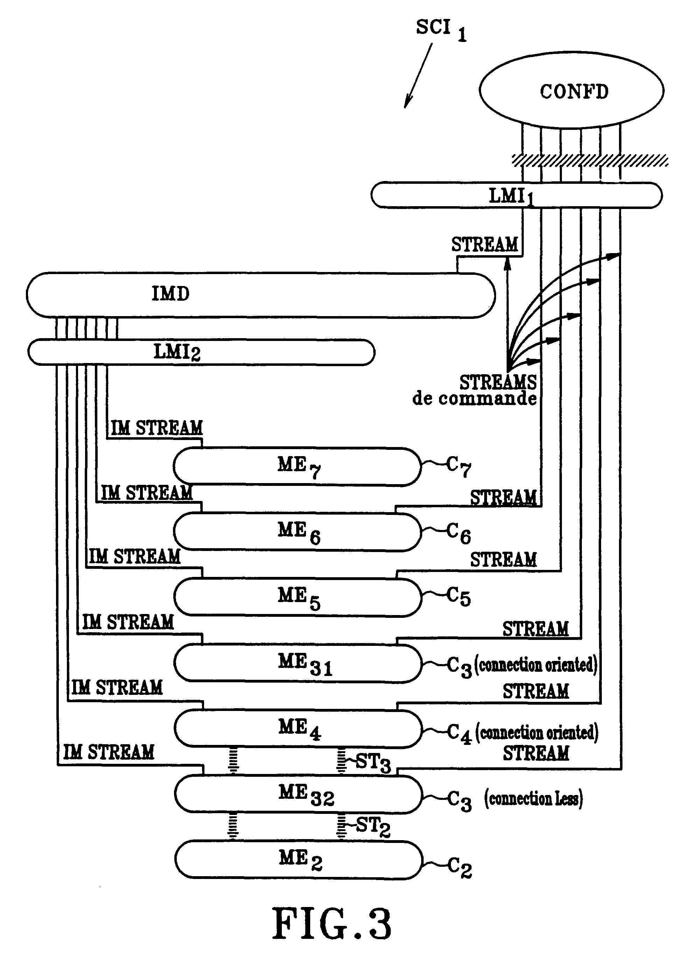

La figure 3 montre la structure plus générale d'un système de communication selon l'invention SCI₁ où les deux entités constituées par le système hôte HOST et le processeur de communication NCC₁ sont réunis en une seule. On peut observer sur cette même figure que l'on retrouve un module de configuration CONFD dont le rôle est strictement analogue à celui de la figure 2, un module d'administration IMD dont le rôle est strictement identique à celui de la figure 2, une première interface d'administration LMI₁ dont le rôle est identique à l'interface d'administration LMAI₁ de la figure 2, une seconde interface d'administration LMI₂ dont le rôle est strictement identique à celui de l'interface d'administration LMAI₂ de la figure 2.

Ainsi, la première interface d'administration LMI₁ assure la liaison entre le module de configuration CONFD et chacune des entités d'administration des couches C₆ à C₂ par l'intermédiaire de STREAM de commande de type ADM STREAM. La première interface assure également la liaison par l'intermédiaire d'un STREAM, ADM STREAM avec le module d'administration IMD.

La seconde interface d'administration LMI₂ assure la liaison entre le module d'administration IMD et chacune des entités d'administration des couches C₇ (couche de présentation) à C₂ aux moyens de liaison de type IM STREAM. Les entités d'administration des couches C₇ à C₂ sont respectivement désignées par ME₇ à ME₂. On a représenté sur la figure 3 les entités d'administration ME₃₁ et ME₃₂ qui sont les entités d'administration des couches C₃ relatives respectivement à un réseau fonctionnant suivant le mode connecté (Connection Oriented) et suivant le mode non connecté (Connection Less). La liaison entre ME₄ et aussi bien ME₃₁ que ME₃₂ est assurée par des liaisons de type STREAM connues.

Il est bien entendu que le fonctionnement des systèmes de communication SCI de la figure 2 et SCI₁ de la figure 3 est identique.

Aussi bien à la figure 2 qu'à la figure 3, chaque entité d'administration de couche, aussi bien LME₁₁ à LME₂₁, LME₄ et IAM, que les différentes entités ME₇ à ME₂, gère un ensemble d'objets décrits chacun par une pluralité d'attributs. Ces ensembles d'objets sont conformes aux différents standards définissant chacun des modèles de référence, qu'il s'agisse du modèle OSI, du modèle ISO/DSA, ou encore du modèle IPS. On peut également implémenter dans le processeur de communication ou dans le système de communication SCI₁, des protocoles de gestion standards, tels que les protocoles SNMP, CNMA, ou encore OSI/NMFORUM.

Le module IMD travaille en liaison avec le système d'exploitation soit du processeur de communication, soit du système de communication SCI₁ dans son ensemble, et est chargé du routage des messages vers ou depuis les entités et les outils de maintenance, de configuration et d'administration qui se trouvent également à l'intérieur de ces couches. Ainsi qu'on a pu le constater ci-dessus, tous les échanges entre les entités d'administration et le module IMD sont basés sur des communications aux moyens de fonctions STREAM.

Quant aux première et deuxième interfaces d'administration, à savoir LMAI₁ ou LMAI₂ à la figure 2, LMI₁ et LMI₂ à la figure 3, elles définissent les dialogues entre le module IMD, le configurateur CONFD et les différentes entités d'administration des couches situées à l'intérieur de codes de communication.

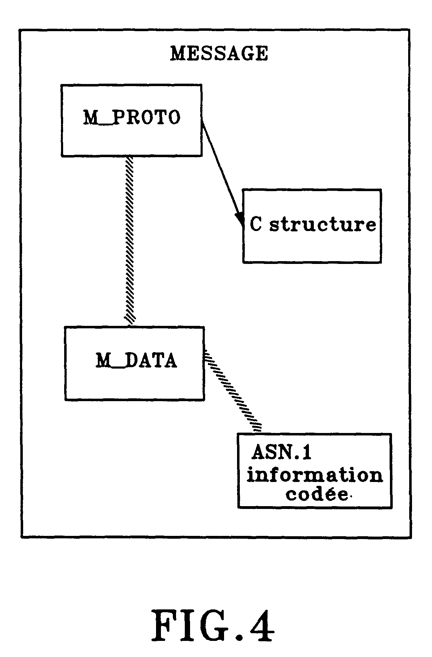

On considère désormais la figure 4 qui montre la forme générale d'un message conforme au standard STREAM utilisé pour transporter les fonctions primitives d'administration, une primitive définissant le sens d'un message.

Un message comprend un premier bloc, désigné par M-PROTO suivi ou non par un bloc. appelé M-DATA. Chaque fonction primitive est formée par une structure de données spécifique dite structure C, qui est suivie ou non par un ensemble de données (terme anglo-saxon = buffer) qui contient l'information administrative échangée. Chaque structure de données C définit l'échange global d'informations entre les entités et le module IMD. Cette structure de donnée C est contenue à l'intérieur du bloc M-PROTO. l'information associée à la primitive qui définit le sens de celle-ci est transportée dans le bloc M-DATA. M-PROTO et M-DATA sont encodés dans un format de type ASN.1 pour répondre aux exigences du module IMD. Le type d'informations codé ASN.1 est le suivant :
- une liste de status, encore appelée Status-list : cette liste fournit les états des différentes entités ou objets que l'on a voulu administrer.
- une liste appelée Param-list qui comprend la liste des différentes entités ou objets que l'on veut administrer.
- une liste dite Ident-list qui comprend le liste des identifiants des objets dont on souhaite récupérer les valeurs.

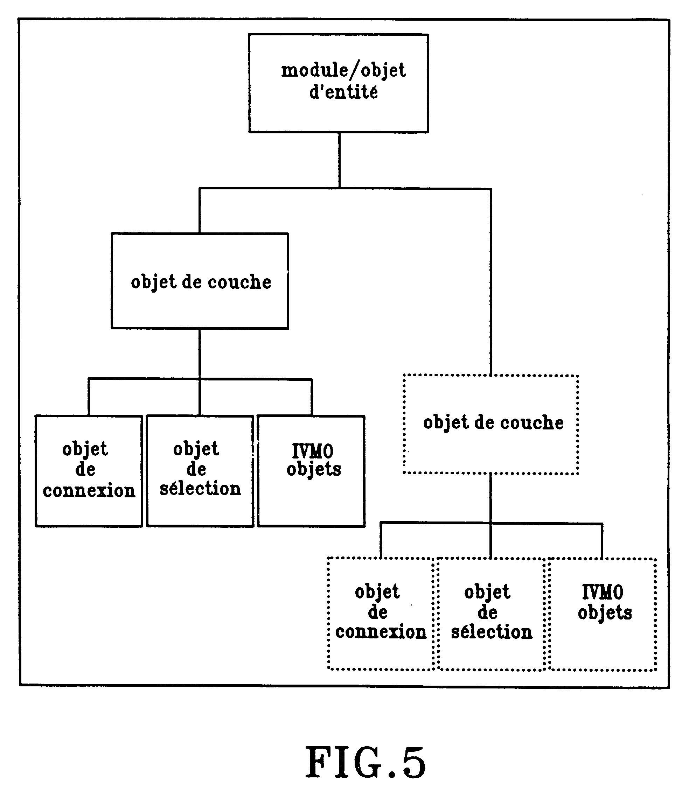

On se reporte à la figure 5 qui montre la hiérarchie des différents objets. Un objet de module, par exemple un objet d'un module tel que MOSI, MDIWS, MIPS contient des objets de couche, c'est-à-dire soit un objet de la couche 4 soit un objet de la couche 3, lequel contient une pluralité d'objets qui sont soit des objets de connexion, soit des objets de sélection, soit encore des objets dits IVMO qui est le sigle anglais de Initial Value Manage Object, et qui par conséquent sont des objets définissant les valeurs initiales de chaque objet de couches.

Un module ou une entité administrative est identifié par un entier appelé SUBSYSTEM-id. Pour les entités contenues à l'intérieur du système d'exploitation, que ce soit à l'intérieur du système d'exploitation du processeur de communication, ou encore plus généralement à l'intérieur du système d'exploitation d'un système de communication tel que SCI₁, l'identifiant du module est donné par le configurateur CONFD à l'instant de l'initialisation. Le module IMD utilise cet identifiant pour expédier les messages vers le module correct ou vers l'entité à l'intérieur d'une couche.

Un objet administré est identifié par trois champs qui sont les suivants :
- SUBSYSTEM-id : ce champ définit l'identifiant du module qui contient cet objet administré.
- OBJECT-type : cet identifiant définit le type administratif de l'objet.
- OBJECT-name : il s'agit ici soit, pour le modèle OSI d'un identifiant donnant un nom interne donné par le module qui contient l'objet, soit, pour le modèle IPS d'un entier (O à n) permettant de reconnaître les (O à n) premiers paramètres véhiculés dans le bloc M-DATA, comme étant des paramètres particuliers utilisés pour la recherche de l'instance de l'objet demandée (dans le cas où le module ne peut être nommé).

L'implémentation du module suppose que les objets administrés de même type qui sont contenus dans celui-ci aient des noms différents.

Les paramètres communs à des primitives émises par toute interface d'administration (LMAI, LMI aux figures 2 et 3) sont les suivantes :
Les paramètres dénommés PRIM-name et PRIM-type identifient une demande de l'interface d'administration ou une réponse.
Le paramètre IM-userid est fourni par le module IMD et permet à ce dernier d'effectuer un routage correct de la réponse vers l'entité qui a fourni la demande. Il est clair que ce dernier paramètre à la même valeur qu'il s'agisse de la demande ou de la réponse.
Parmi les paramètres communs à toutes les primitives relatives aux interfaces d'administration, on trouve également les paramètres SUBSYSTEM-id, OBJECT-type et OBJECT-name définis ci-dessus.
Il existe également un autre paramètre appelé OBJECT-subtype qui est utilisé pour distinguer des ensembles d'objets du même type mais qui ne supportent pas les mêmes demandes administratives.
En ce concerne les objets de sélection, de connexion et de type IVMO, l'objet immédiatement supérieur à ceux-ci représente l'objet de couche qui les contient. Il est identifié par les trois champs suivants :
   - SUBSYSTEM-upid est l'identifiant de l'entité, c'est-à-dire de la couche qui contient l'objet supérieur,
   - OBJECT-uptype est le type administratif de l'objet supérieur,
   - OBJECT - upname est le nom de l'objet supérieur.

Il existe deux types de message utilisés par les modules CONFD, IMD, et LMAI₁, LMAI₂, LMI₁, LMI₂ à savoir d'une part les messages administratifs et d'autre part les messages de configuration.

On considère tout d'abord les différents messages administratifs. La liste de ceux-ci figure en annexe 1 pour les messages administratifs et en annexe 2 pour les message de configuration. Sur chacune de ces deux annexes, on a fait figurer dans une colonne le nom du message et dans les colonnes suivantes, le modèle de référence, à savoir, de type OSI, ou IPS ou encore de type FDDI auquel appartient le message . On a encore fait figurer dans les deux dernières colonnes de droite le nom de l'émetteur du message et le nom du récepteur du message.

Les messages d'administration qui sont numérotés de 1 à 21 (qui sont de type 1 à 21) sont les suivants :
1. Message ADM-BIND-LAYER-REQ :
   Ce message est un message de requête envoyé à une entité d'administration par le module IMD, en vue d'initialiser le dialogue entre cette dernière et ce module. C'est le premier message envoyé à l'entité par le module en question. L'entité répond en envoyant un (ou davantage) message appelé ADM-BIND-OBJ-IND qui indique quel type d'objet l'entité en question administre. Lorsque l'entité a envoyé vers IMD l'ensemble des messages ADM-BIND-OBJ-IND corrrespondant à l'ensemble des objets qu'elle gère, elle envoie un message ADM-OK-ACK vers IMD pour lui signaler la fin de sa réponse. Aucun autre message ne peut être envoyé par le module IMD à une entité d'administration avant réception de ce dernier message d'acquittement. L'entité qui reçoit le message de requête affecte alors une liaison de type STREAM à des informations d'administration.
2. Message ADM-BIND-OBJ-IND :
   Ce message est renvoyé en réponse au précédent par l'entité d'administration à laquelle s'adresse le module IMD. Il est envoyé sur une fonction STREAM de type IM-STREAMS. L'entité d'administration envoie un seul message de cette nature par type d'objet administré.
3. Message ADM-OK-ACK :
   Ce message termine le dialogue d'initialisation entre le module IMD et l'entité d'administration. Il est envoyé sur une IM-Streams après un ou plusieurs messages de type 2 en réponse au message de type 1.
   Ce message peut également être utilisé pour indiquer au module IMD qu'un message précédemment envoyé a été reçu avec succès par une entité d'administration quand pour celle-ci aucune autre réponse n'est définie.
4. Message ADM-ERROR-ACK :
   Ce message indique à IMD qu'un message précédemment envoyé n'a pas été reçu avec succès par une unité d'administration et ne peut pas être traité à cause d'une erreur du système. Ce message indique les raisons du défaut. La réception de ce message indique par ailleurs à IMD qu'aucune action n'a été entreprise sur le message qui a provoqué cette réponse négative.
5. Message ADM-LIST-REQ :
   Ce message est envoyé par le module spécifié dans le champ OBJECT-type.
   Pour les objets de connexion, de sélection et IVMO, il fournit le nom des objets dont le type est spécifié dans le champ OBJECT-type et qui sont associés à l'objet de couche identifié par les champs OBJECT-uptype, OBJECT-upname, SUBSYSTEM.
6. Message ADM-LIST-ACK :
   Ce message est envoyé par une entité de PILE (empilement de couches) au module IMD en réponse à son message de type 5. Il donne la liste des noms administratifs aux instances d'objet pour un type d'objet donné.
7. Message ADM-GET-REQ :
   Ce message est envoyé par IMD pour demander à une entité administrée de retourner la valeur des attributs d'une instance d'objet. Si une liste d'attributs est fournie, la liste des valeurs des attributs doit être retournée au module IMD. Si aucune liste n'est fournie, toutes les valeurs d'attributs doivent être retournées. Une erreur est indiquée dans la réponse fournie par l'entité d'administration si un attribut quelconque ne peut être lu.
8. Message ADM-GET-ACK :
   Ce message est envoyé par l'entité d'administration à IMD en réponse au message précédent de type 7. Il renvoie les valeurs d'attributs de l'instance d'objet requises. Une erreur est indiquée si au moins un attribut ne peut être lu.
9. Message ADM-GETNEXT-REQ :
   Ce message permet à une entité d'administration d'obtenir les attributs de toutes les instances d'un objet sans connaître le nom de ces instances. Il n'est pas alors nécessaire d'envoyer un message de type 5 pour obtenir le nom de l'instance d'objet. La liste des noms d'objet est gérée dans un ordre arbitraire par l'entité, cet ordre dépendant de l'implémentation de celle-ci à l'intérieur de la couche.
10. Message ADM-GETNEXT-ACK :
   Ce message est envoyé par une entité d'administration en réponse au message de type 9. Elle renvoie au module IMD la valeur des attributs d'objet demandée. Une erreur est indiquée si ces attributs ne peuvent être lus.
11. Messages ADM-SET-REQ :
   Ce message est envoyé par IMD à une entité d'administration sur une IM STREAM. Il permet de donner une nouvelle valeur aux attributs d'une instance d'objet. Cette opération s'applique à des attributs qui sont définis comme étant en mesure d'être écrits. Leur liste fournie, dans la partie M-DATA contient les identifiants des attributs et les valeurs associées qu'on donne aux valeurs d'attributs qui doivent être remplacées.
12. Messages ADM-SET-ACK :
   Ce message est envoyé par une entité d'administration en réponse au message précédent de type 11. II indique si l'opération de changement de valeur des attributs requise par le message de type 11 a été couronné de succès ou non.
13. Messages ADM-TEST-REQ :
   Ce message est envoyé aux entités d'administration par IMD. Il permet de vérifier si la valeur de plusieurs attributs d'une instance d'objet peut être simultanément modifiée pour avoir une nouvelle valeur. Les valeurs d'attributs ne sont pas modifiées par ce message.
14. Message ADM-TEST-ACK :
   Ce message est un message d'acquittement envoyé par une entité d'administration en réponse au message précédent de type 13.
15. Message ADM-ACTION-REQ :
   Ce message est envoyé par IMD aux entités d'administration. Les fonctions de ce message dépendent du type d'action mentionné dans le champ PRIM-type.
16. Message ADM-ACTION-ACK :
   Ce message est envoyé par une entité d'administration en réponse au message précédent de type 15 et indique le succès ou l'insuccès de cette dernière requête.
17. Message ADM-ADD-REQ :
   Ce message demande à une entité d'administration de créer une nouvelle instance d'objet. Il n'est pas admis pour tous les types d'objet. Pour la création d'un objet, un certain nombre d'attributs de l'objet sont exigés et doivent être fournis dans la requête. Le nom de l'objet devant être créé est fourni par le module qui l'administrera. Ce nom est fourni dans la réponse à la requête constituée par ce message.
18. Message ADM-ADD-ACK :
   Ce message est envoyé par une entité d'administration en réponse au message précédent de type 17 et il permet l'acquittement en cas de succès de la requête.
19. Message ADM-REMOVE-REQ :
   Ce message demande à une entité d'administration d'enlever une instance d'objet.
20. Message ADM-REMOVE-ACK :
   Ce message est envoyé par une entité d'administration en réponse au message précédent de type 19 pour acquitter le succès ou l'insuccès de la requête correspondant à ce message de type 19.
21. Message ADM-EVENT-IND :
   Ce message indique au module IMD qu'un événement se déroule dans l'entité de couche. Pour le module d'administration, il n'y a pas d'acquittement lorsqu'il reçoit l'indication qu'un événement est arrivé dans la dite entité de couches.

Ainsi qu'on peut le voir sur l'annexe 1, l'ensemble des messages de type 1 à 21 est utilisé pour le modèle de référence OSI ou ISO/DSA. L'ensemble de ces messages est également utilisé pour le modèle IPS à l'exception des messages 5 et 6.

Pour le réseau de type FDDI, on utilise également les messages de type 4 et 7 à 21.

En ce qui concerne l'identification des objets pour le modèle de référence IPS, elle présente certains aspects particuliers par rapport à l'identification pour le modèle de référence OSI.

Le champ OBJECT-type est une classe d'objets qui est composée de paramètres. Un objet IPS est défini par son champ OBJECT-type et par une instance de cette classe. SI c'est un simple objet (mono-instance) l'identification est donnée simplement par le champ (OBJECT-type). Une instance est définie par les valeurs de paramètres de sélection. Ces derniers qui donnent une identification et une valeur sont transmis dans le bloc de messages M-DATA de la requête.

Le champ OBJECT-name contient le nombre de paramètres utilisés pour la sélection. Ainsi, si cela est nécessaire, les premières instances du bloc de messages M-DATA sont les paramètres de sélection.

Les blocs de messages M-DATA sont codés en ASN.1.

On considère désormais les différents messages de configuration numérotés de 22 à 32 (de type 22 à 32) qui sont les suivants et qui apparaissent en annexe 2.

La présentation de l'annexe 2 est strictement identique à la présentation de l'annexe 1.

Ces différents messages sont les suivants :
22. Message ADM-SUBSYSTEM-ID :
   Ce message est envoyé par le configurateur CONFD dès l'ouverture de chacun des modules du processeur de communication de la figure 2 ou par chacun des modules du système SCI1 de la figure 3, soit en étant véhiculé par un ADM STREAM ou par un IM STREAM. N'importe quelle entité qui veut être administrée peut prendre en compte ce message et doit savoir le comprendre.
23. Message ADM-STREAM-BIND :
   Ce message est envoyé par CONFD juste après l'ouverture du Stream de commande d'un module. Ce stream est ensuite affecté par ledit module au configurateur CONFD.
24. Message ADM-STREAM-ACK :
   Ce message est renvoyé par le module au configurateur si la requête du message précédent de type 23 a été acceptée.
25. Message ADM-STREAM-NACK :
   Ce message est renvoyé par le module au configurateur CONFD si la requête indiqué par le message de type 23 a été refusée.
26. Message ADM-STREAM-OPEN :
   Ce message est envoyé au configurateur sur un ADM STREAM par un module, pour demander une nouvelle liaison de type Stream à un autre module. C'est le cas par exemple de la création de liaison streams entre la couche C4 et la couche C3 du modèle OSI. Cette liaison est à créer de manière dynamique ainsi que les normes le prévoient.
27. Message ADM-STREAM-CLOSE :
   Ce message est envoyé au configurateur CONFD par un module pour demander la déconnexion d'un module. C'est le cas par exemple, en modèle OSI, d'une couche C4 (couche dite COTP) qui demande la déconnexion d'une couche C3 (dite couche CLNP) c'est-à-dire qui demande la rupture de la liaison streams entre elles.
28. Message ADM-STREAM-ERROR :
   Ce message est envoyé par le configurateur CONFD au module auquel le configurateur s'est adressé si une erreur s'est produite durant l'envoi d'une requête délivrée par le message ADM-STREAM-OPEN (message de type 26).
29. Message M-IOCTLI-LINK :
   Ce message est envoyé par le configurateur en réponse au module auquel il s'est adressé, si aucune erreur ne s'est produite durant l'envoi de la requête correspondant au message de type 26.
30. Message M-IOCTLI-UNLINK :
   Ce message est envoyé par le configurateur en réponse au module auquel il s'est adressé, si aucune erreur n'est survenue durant l'envoi de la requête correspondant au message ADM-STREAM-CLOSE (message de type 27).
31. Message M-IOCACK :
   Ce message est renvoyé par le module au configurateur après l'envoi d'une requête correspondant à l'un ou l'autre des messages définis en 29 ou 30.
32. Message M-IOCNACK :
   Ce message est renvoyé par le module au configurateur après l'envoi d'une requête correspondant à l'un ou l'autre des messages de type 29 ou 30. Il correspond à un acquittement négatif.

On voit, en regardant l'annexe 2, que l'ensemble des messages de configuration est valable pour un empilement de couches de type OSI. Pour un empilement de type IPS, seul le message ADM-SUBSYSTEM-ID est utilisé lors de l'initialisation du processeur de communication.

Le message ADM-SUBSYSTEM-ID est uniquement envoyé à IAM (module interne spécifique, servant d'interface administrative entre les couches C₃ et C₄ de l'empilement de type IPS, et les commandes administratives délivrées par l'antenne administrative) par le configurateur CONFD.

Ce module interne représente, par construction, l'interface administrative de l'ensemble des couches du module MIPS.

En ce qui concerne la configuration pour le réseau FDDI, on utilise des messages normalisés de type connus SMT.

Par ailleurs, les annexes 3, 4, 5, 6 résument ce qu'il a été dit plus haut dans la description de chacun des messages. Ainsi, pour l'annexe 3, on retrouve l'ensemble des messages de configuration qui ont été définis ci-dessus en fonction des différentes circonstances. On a symbolisé sur cette annexe par un trait vertical le configurateur CONFD situé dans la partie centrale de la figure, alors que l'entité considérée, c'est-à-dire par exemple une entité d'administration de l'une des couches C₄ ou C₃ de l'un des modules MOSI, MIPS, MDIWS est représentée par un trait vertical situé sur la droite de la figure. Les messages sont symbolisés par des flèches, le sens de la flèche indiquant le sens dans lequel le message est envoyé. On voit donc en lisant par exemple la partie supérieure de l'annexe 3 que pour le succès de la requête de création d'une nouvelle liaison, on utilise successivement les messages ADM-STREAM-OPEN, envoyés par l'entité à CONFD, le message M-IOCTLI-LINK envoyé par le configurateur à l'entité et enfin le message M-IOCACK envoyé par l'entité au configurateur. Il est évident que la lecture de l'annexe 3 et des autres annexes est tout à fait identique à celle qui vient d'être indiquée pour la partie supérieure de l'annexe 3.

L'annexe 4 montre l'échange de messages entre le module IMD et une quelconque entité et on y retrouve pratiquement l'ensemble de tous les messages d'administration décrits ci-dessus.

L'annexe 5 décrit les deux messages qui sont échangés entre le module IMD et une entité quelconque lorsqu'un message envoyé par IMD n'est pas accepté par l'entité de couche en raison d'une erreur empêchant le traitement correct du message.

L'annexe 6 montre l'échange de messages entre CONFD, IMD et une entité de PILE lors de la phase d'initialisation.

| ADM | | | | | |
|---|---|---|---|---|---|
| **MESSAGES** | **OSI** | **IPS** | **FDDI** | **EMETTEUR** | **RECEPTEUR** |
| ADM-BIND-LAYER-REQ | X | X | | IMD | LME |
| ADM-BIND-OBJ-IND | X | X | | LME | IMD |
| ADM-OK-ACK | X | X | | LME | IMD |
| ADM-ERROR-ACK | X | X | X | LME | IMD |
| ADM-LIST-REQ | X | | | IMD | LME |
| ADM-LIST-ACK | X | | | LME | IMD |
| ADM-GET-REQ | X | X | X | IMD | LME |
| ADM-GET-ACK | X | X | X | LME | IMD |
| ADM-GETNEXT-REQ | X | X | X | IMD | LME |
| ADM-GETNEXT-ACK | X | X | X | LME | IMD |
| ADM-SET-REQ | X | X | X | IMD | LME |
| ADM-SET-ACk | X | X | X | LME | IMD |
| ADM-TEST-REQ | X | X | X | IMD | LME |
| ADM-TEST-ACK | X | X | X | LME | IMD |
| ADM-ACTION-REQ | X | X X | X | IMD | LME |
| ADM-ACTION-ACK | X | X | X | LME | IMD |
| ADM-ADD-REQ | X | X | X | IMD | LME |
| ADM-ADD-ACK | X | X | X | LME | IMD |
| ADM-REMOVE-REQ | X | X | X | IMD | LME |
| ADM-REMOVE-ACK | X | X | X | LME | IMD |
| ADM-EVENT-IND | X | X | X | LME | IMD |

| ANNEXE 1 | | | | | |
|---|---|---|---|---|---|
| | | | | | |

| CONFIG | | | | | |
|---|---|---|---|---|---|
| **MESSAGES** | **OSI** | **IPS** | **FDDI** | **EMETTEUR** | **RECEPTEUR** |
| ADM-SUBSYSTEM-ID | X | X | | CONFD | LME |
| ADM-STREAM-BIND | X | | | CONFD | LME |
| ADM-STREAM-ACK | X | | | LME | CONFD |
| ADM-STREAM-NACK | X | | | LME | CONFD |
| ADM-STREAM-OPEN | X | | | LME | CONFD |
| ADM-STREAM-CLOSE | X | | | LME | CONFD |
| ADM-STREAM-ERROR | X | | | CONFD | LME |
| M-IOCTLI-LINK | X | | | CONFD | LME |
| M-IOCTLI-UNLINK | X | | | CONFD | LME |
| M-IOCACK | X | | | LME | CONFD |
| M-IOCNACK | X | | | LME | CONFD |

| ANNEXE 2 | | | | | |
|---|---|---|---|---|---|
| | | | | | |

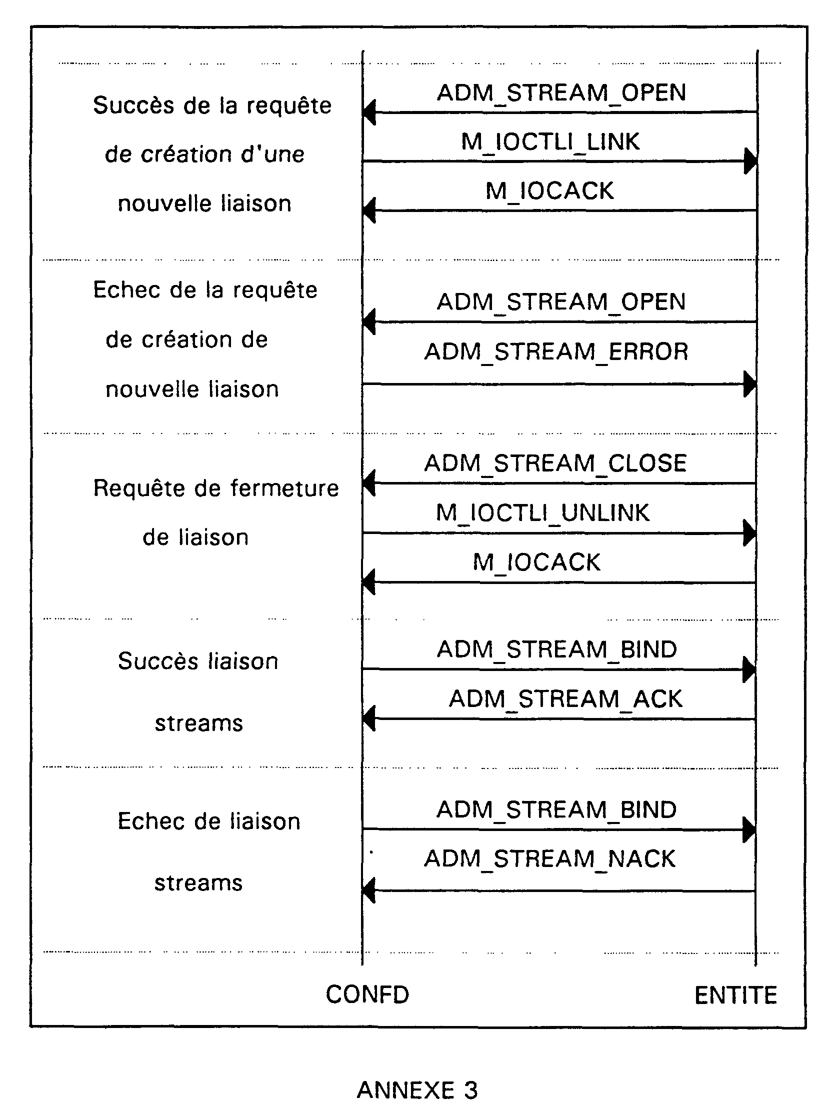

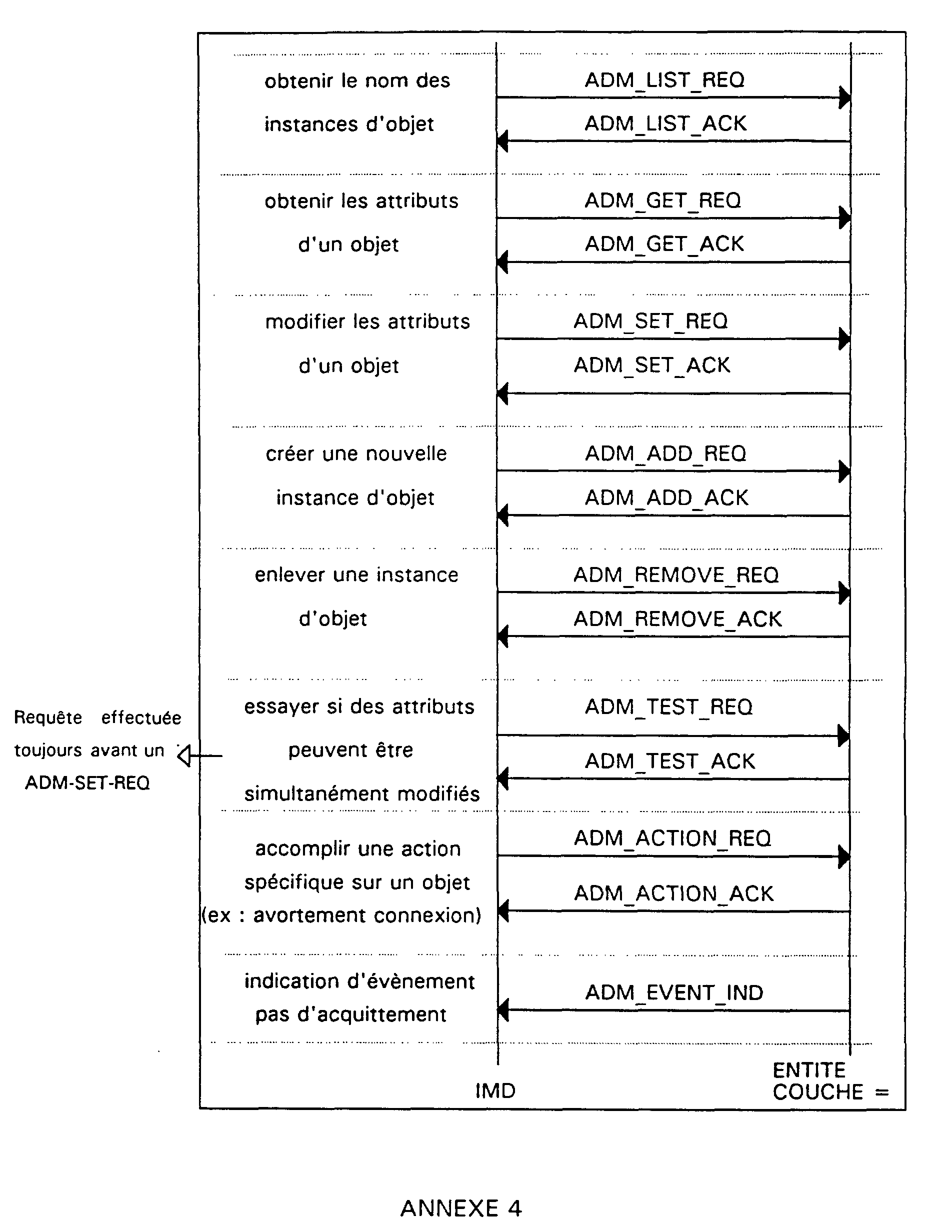

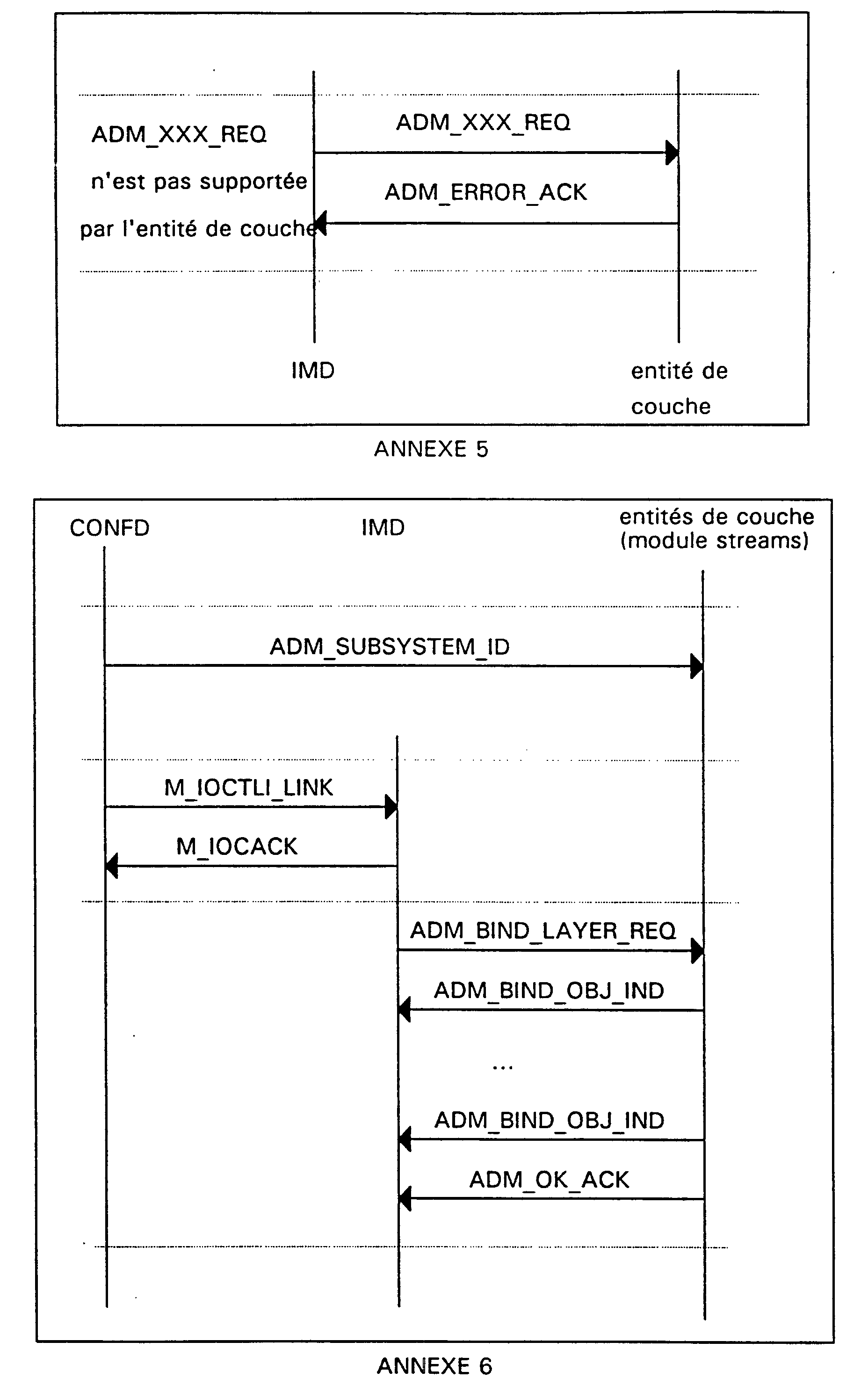

## Revendications

1. Procédé de communication avec un réseau (RE,...) par l'intermédiaire d'un système de communication mettant en oeuvre un code de communication (CC) appartenant à une pluralité de modèles d'interconnexion de systèmes ouverts (OSI, ISO/DSAC, IPS), le travail du système étant organisé par au moins un système d'exploitation (GPOS, SE1) associé à une pluralité d'applications et dont le but est de transmettre ou de recevoir des données nécessaires aux applications vers ou depuis le réseau, le système comprenant un ensemble d'administration des différentes couches formant (C4, C3, C2) formant le code (CC) comprenant une pluralité de modules de communication appartenant à divers modèles caractérisé en ce qu'il consiste à
■ établir, lors de l'initialisation du système, l'empilement des différentes couches au moyen de liens entre celles-ci par l'intermédiaire d'un configurateur (CONFD) du système,
■ et, par l'intermédiaire d'un module d'administration (IMD) du système, à accéder à toutes informations d'ordre administratif à l'intérieur de chacune des couches du code, ces dernières comportant chacune au moins une entité d'administration (LME11, LME12, ...), une entité d'administration pouvant interfacer plusieurs couches de communication d'un module de communication donné, le module d'administration communiquant avec au moins ladite entité d'administration dans un langage commun à toutes lesdites au moins une entité administrative,
- une première interface d'administration (LMAI1, LMI1) étant disposée entre le configurateur (CONFD), et les différentes entités d'administration, et entre le configurateur (CONFD) et le module d'administration
- une deuxième interface d'administration (LMAI2, LMI2) étant disposée entre le module d'administration (IMD) et les entités d'administration des couches (LME11, LME12, ...).

2. Procédé de communication selon la revendication 1, caractérisé en ce qu'il consiste à disposer les entités (LME11, LME12,...) à l'intérieur de chaque couche pour le modèle de référence OSI, et en ce qu'il consiste à disposer une entité commune à toutes les couches dans la couche supérieure du modèle IPS, chaque entité organisant le travail d'administration de chacune des couches pour le modèle OSI et de l'ensemble des couches pour le modèle IPS.

3. Procédé de communication selon la revendication 2, caractérisé en ce qu'il consiste à gérer un ensemble d'objets décrits chacun par une pluralité d'attributs par l'intermédiaire de chaque entité d'administration.

4. Procédé selon la revendication 1, caractérisé en ce que le module d'administration (IMD) travaille en liaison avec le système d'exploitation (GPOS, SE1, ...) et effectue le routage de messages d'administration (ADM-BIND-LAYER-REQ, ...) vers ou depuis les entités (LME11, ...) et les outils de maintenance et de configuration disposés à l'intérieur des couches, la première et le deuxième interface (LMAI1, LMAI2, LMI1, LMI2) établissant les dialogues entre le module d'administration (IMD) le configurateur (CONFD) et les différentes entités d'administration (LME11, ...).

5. Procédé selon la revendication 4, caractérisé en ce qu'il consiste à inclure dans un message un premier bloc (M-PROTO) suivi d'un second bloc (M-DATA), le premier bloc comprenant une structure de données dite primitive consistant à définir l'échange d'informations entre les entités et le module d'administration (IMD), et le second bloc comprenant des informations consistant à définir la signification de la primitive.

6. Procédé selon la revendication 3, caractérisé en ce qu'il consiste à inclure dans chaque objet d'un module des objets de couche contenant chacun soit des objets de connexion, soit des objets de sélection, soit des objets IVMO définissant les valeurs initiales de chaque objet de couche.

7. Procédé selon la revendication 6, caractérisé en ce qu'il consiste à identifier chaque objet administré par l'intermédiaire de 3 champs, le premier champ (SUBSYSTEM-id) définissant l'identifiant du module de communication contenant l'objet en question, le second champ (OBJECT-type) définissant le type administratif de l'objet et le troisième champ (OBJECT-name) le nom interne donné par le module de communication qui contient cet objet.

## Claims

1. Method of communicating with a network (RE, ...) via a communication system using a communication code (CC) belonging to a plurality of open system interconnection models (OSI, ISO/DSAC, IPS), the work of the system being organised by a least one operating system (GPOS, SE1) associated with a plurality of applications and having the aim of transmitting or receiving data necessary for the applications to or from the network, the system comprising an administrative unit of the various layers forming (C4, C3, C2) forming the code (CC) comprising a plurality of communication modules belonging to various models characterised in that it consists in
• establishing, when the system is initialised, the stacking of the various layers by means of links between said layers via a configurator (CONFD) of the system,
• and, via a system administrative module (IMD), accessing all information of an administrative nature within each of the layers of the code, said layers each comprising at least one administrative entity (LME11, LME12, ...), an administrative entity being capable of interfacing several communication layers of a given communication module, the administrative module communicating with at least said administrative entity in a language common to all said layers at least one administrative entity.
- a first administrative interface (LMAI1, LMI1) being arranged between the configurator (CONFD), and the various administrative entities, and between the configurator (CONFD) and the administrative module
- a second administrative interface (LMAI2, LMI2) being arranged between the administrative module (IMD) and the administrative entities of the layers (LME11, LME12, ...).

2. Communication method according to Claim 1, characterised in that it consists in arranging the entities (LME11, LME12, ...) within each layer for the OSI reference model, and in that it consists in arranging an entity common to all the layers in the upper layer of the IPS model, each entity organising the administrative work of each of the layers for the OSI model and the set of layers for the IPS model.

3. Communication method according to Claim 2, characterised in that it consists in managing a set of objects each described by a plurality of attributes via each administrative entity.

4. Method according to Claim 1, characterised in that the administrative module (IMD) works in liaison with the operating system (GPOS, SE1, ...) and routes administrative messages (ADM-BIND-LAYER-REQ, ...) to or from the entities (LME11, ...) and the maintenance and configuration tools arranged within the layers, the first and the second interface (LMAI1, LMAI2, LMI1, LMI2) establishing the dialogues between the administrative module (IMD) the configurator (CONFD) and the various administrative entities (LME11, ...).

5. Method according to Claim 4, characterised in that it consists in including within a message a first block (M-PROTO) followed by a second block (M-DATA), the first block comprising a data structure known as a primitive consisting in defining the exchange of information between the entities and the administrative module (IMD), and the second block comprising information consisting in defining the meaning of the primitive.

6. Method according to Claim 3, characterised in that it consists in including, within each object of a module, layer objects each containing either connection objects or selection objects, or IVMO objects defining the initial values of each layer object.

7. Method according to Claim 6, characterised in that it consists in identifying each administered object by means of 3 fields, the first field (SUBSYSTEM-id) defining the identifier of the communication module containing the object in question, the second field (OBJECT-type) defining the administrative type of the object and the third field (OBJECT-name) the internal name given by the communication module that contains that object.

## Patentansprüche

1. Verfahren zur Kommunikation mit einem Netz (RE, ...) über ein Kommunikationssystem, das einen Kommunikationscode (CC) verwendet, der zu mehreren Modellen zur gegenseitigen Verbindung offener Systeme (OSI, ISO/DSAC, IPS) gehört, wobei die Arbeit des Systems durch wenigstens ein Betriebssystem (GPOS, SE1) organisiert wird, dem mehrere Anwendungen zugeordnet sind und dessen Ziel es ist, für die Anwendungen notwendige Daten in das Netz zu senden oder vom Netz zu empfangen, wobei das System eine Einheit für das Management der den Code (CC) bildenden verschiedenen Schichten (C4, C3, C2) umfaßt, die mehrere Kommunikationsmodule enthält, die verschiedenen Modellen zugehören, dadurch gekennzeichnet, daß es darin besteht,
• bei der Initialisierung des Systems den Stapel der verschiedenen Schichten durch Verbindungen zwischen ihnen über einen Konfigurator (CONFD) des Systems aufzubauen,
• und über ein Management-Modul (IND) des Systems auf sämtliche Management-Informationen in jeder der Schichten des Codes zuzugreifen, wobei diese letzteren jeweils wenigstens eine Management-Entität (LME11, LME12, ...) besitzen, wobei eine Management-Entität eine Schnittstelle zwischen mehreren Kommunikationsschichten eines Kömmunikationsmoduls bilden kann, wobei das Management-Modul wenigstens mit der Management-Entität in einer Sprache kommuniziert, die allen der wenigstens einen Management-Entität gemeinsam sind,
- wobei eine erste Management-Schnittstelle (LMAI1, LMI1) zwischen dem Konfigurator (CONFD) und den verschiedenen Management-Entitäten sowie zwischen dem Konfigurator (CONFD) und dem Management-Modul angeordnet ist,
- wobei eine zweite Management-Schnittstelle (LMAI2, LMI2) zwischen dem Management-Modul (IND) und den Management-Entitäten (LME11, LME12, ...) der Schichten angeordnet ist.

2. Kommunikationsverfahren nach Anspruch 1, dadurch gekennzeichnet, daß es darin besteht, die Entitäten (LME11, LME12, ...) in jeder Schicht für das Referenzmodell OSI anzuordnen und daß es darin besteht, eine allen Schichten gemeinsame Entität in der oberen Schicht des Modells IPS anzuordnen, wobei jede Entität die Management-Arbeit jeder der Schichten für das Modell OSI und für die Gesamtheit der Schichten für das Modell IPS organisiert.

3. Kommunikationsverfahren nach Anspruch 2, dadurch gekennzeichnet, daß es darin besteht, eine Gesamtheit von Objekten, die jeweils durch mehrere Attribute beschrieben werden, über jede Management-Entität zu steuern.

4. Verfahren nach Anspruch 1, dadurch gekennzeichnet, daß das Management-Modul (ING) in Verbindung mit einem Betriebssystem (GPOS, SE1, ...) arbeitet und die Lenkung von Management-Nachrichten (ADM-BIND-LAYER-REQ, ...) zu und von den Entitäten (LME11, ...) und den Wartungs- und Konfigurationswerkzeugen, die in den Schichten angeordnet sind, ausführt, wobei die erste und die zweite Schnittstelle (LMAI1, LMAI2, LMI1, LMI2) die Dialoge zwischen dem Management-Modul (IND), dem Konfigurator (CONFD) und den verschiedenen Management-Entitäten (LME11, ...) führen.

5. Verfahren nach Anspruch 4, dadurch gekennzeichnet, daß es darin besteht, in eine Nachricht einen ersten Block (M-PROTO), dem ein zweiter Block (M-DATA) folgt, einzuschließen, wobei der erste Block eine sogenannte primitive Datenstruktur aufweist, die darin besteht, den Informationsaustausch zwischen den Entitäten und dem Management-Modul (IND) zu definieren, und der zweite Block Informationen enthält, die darin bestehen, die Signifikanz der primitiven Struktur zu definieren.

6. Verfahren nach Anspruch 3, dadurch gekennzeichnet, daß es darin besteht, in jedes Objekt eines Moduls Schichtobjekte einzuschließen, wovon jedes entweder Verbindungsobjekte oder Auswahlobjekte oder IVMO-Objekte, die die Anfangswerte jedes Schichtobjekts definieren, enthält.

7. Verfahren nach Anspruch 6, dadurch gekennzeichnet, daß es darin besteht, jedes gemanagte Objekt über drei Felder zu identifizieren, wobei das erste Feld (SUBSYSTEM-id) die Identität des Kommunikationsmoduls definiert, das das fragliche Objekt enthält, das zweite Feld (OBJECT-type) den Management-Typ des Objekts definiert und das dritte Feld (OBJECT-name) den internen Namen definiert, der von dem dieses Objekt enthaltenen Kommunikationsmodul vergeben wird.
